Europäisches Patentamt

(19) European Patent Office

Office européen des brevets

(11) Publication number: **0 098 250**
**B1**

(12) EUROPEAN PATENT SPECIFICATION

(45) Date of publication of patent specification: **10.09.86**

(51) Int. Cl.⁴: **B 62 D 27/06**

(21) Application number: **83850124.5**

(22) Date of filing: **11.05.83**

(54) **Quick socket for struts.**

(30) Priority: **15.06.82 SE 8203702**

(43) Date of publication of application:
**11.01.84 Bulletin 84/02**

(45) Publication of the grant of the patent:
**10.09.86 Bulletin 86/37**

(84) Designated Contracting States:
**AT BE CH DE FR GB IT LI NL**

(56) References cited:
**FR-A-2 216 845**
**GB-A-1 048 810**
**US-A-2 267 802**
**US-A-3 841 695**

(73) Proprietor: **Laxo Mekan Aktiebolag**
**Box 8**
**S-695 01 Laxä (SE)**

(72) inventor: **Persson, Ake R.**
**Box 8**
**S-695 01 Laxa (SE)**

(74) Representative: **Avellan-Hultman, Olle**
**Avellan-Hultman Patentbyra AB P.O. Box 5366**
**S-102 46 Stockholm 5 (SE)**

Courier Press, Leamington Spa, England.

## Description

The present invention relates to a socket and strut apparatus, especially for transport vehicles, and comprising a cylindrical strut and a socket fitting therewith and having a sleeve adapted to be mounted at the wagon bridge or any other part of the vehicle and having a strut receiving space which with some play fits the strut, and further comprising one or more upwards and inwards to the centre of the quick socket biassed wedge means allowing a free introduction of the strut in the socket but restraining a movement of the strut out of the socket from its mounted position.

For many transport purposes there is a need to temporarily arrange struts on the vehicle for holding the load which may be timber or any type of unit of goods which are piled on top of each other. In order to provide a simple and quick mounting the strut ought to be easily detouchable preferably without the use of any tool.

Quick socket for struts are previously known which quick socket comprise an open sleeve which is mounted at the wagon bridge or any other part of the vehicle and in which the strut is simply let down and is supported by a flange in the strut or a bottom flange of the carrier sleeve. The strut is maintained in the sleeve depending on its own weight, but many times this is not sufficient, especially not if the load is secured by means of any type of coupling means which engages the strut and acts upon said strut by a force which has some component force directed vertically upwards.

For solving this problem it has been suggested that the quick socket be formed with a bayonet-catch-like groove and that the strut be formed with a pin projecting from the side of the strut, which pin by cooperation with the bayonet catch groove secures the strut against unintentional vertical movement upwards from the quick socket. Such an apparatus gives a good holding and securing of the strut, but in order that the strut easily might be mounted and dismounted there must be some play between the strut and the strut socket. On load transportation, when the strut generally is loaded in the radial direction the said play is removed but on empty transportation the play is strongly noticable, especially since the wheel springs of the transport vehicle thereby often act very hardly since the springs which are calculated for a suitable spring action in loaded condition are very little loaded on empty transportation. Depending on the play and the hard spring action, the strut and the quick socket are subjected to strong wear, and generally there is also an annoying chattering.

In another type of socket and strut apparatus known e.g. from the US patent US—A—3,841,695 the strut is mounted free from play in that the strut is formed with one or more conical portions which key on corresponding portions of the socket, and in that the strut is secured in the socket by means of a screw acting from underneath. The removing of the strut from such playfree socket is rather time consuming and tools must be used for releasing the attachment screw. It also may happen that the strut has keyed to hard in the socket that strong forces must be used for releasing the socket.

In still another type of socket and strut apparatus known from the British patent GB—A—1,048,810 the strut is clamped in the socket by of a wedge means which may be screw locked or spring clamped to the the strut. In this apparatus there is no positive locking of the strut in the socket, and the strut may under certain conditions move up and out of the socket.

The object of the invention therefore is to solve the problem of providing a socket for a strut, especially for transport vehicles, which is formed so that the strut quickly and easily can be mounted in the socket and dismounted and therefrom, which keeps the strut in the socket without any play and positively secured in the socket even on empty transportation.

The invention therefore relates to a quick socket and a strut apparatus of the aforementioned type as disclosed in GB—A—1048810 mainly characterized in that the strut has a circular cross-section and the socket is formed with a bayonet like locking groove comprising at least one longitudinal groove cooperating with a cross groove at the lower end thereof, and which bayonet like locking groove cooperates with at least one radially outwards projecting shoulder of the strut, thereby preventing unintentional movement of strut out of the quick socket, and in that the wedge means is formed as a concave circular segment which partly encloses and directly acts on the strut while the strut can successively be introduced in the socket part and by time be rotated until the locking shoulder of the strut is in a position locked by the bayonet cross groove.

Further characteristics of the invention will be evident from the following detailed description in which reference will be made to the accompanying drawings.

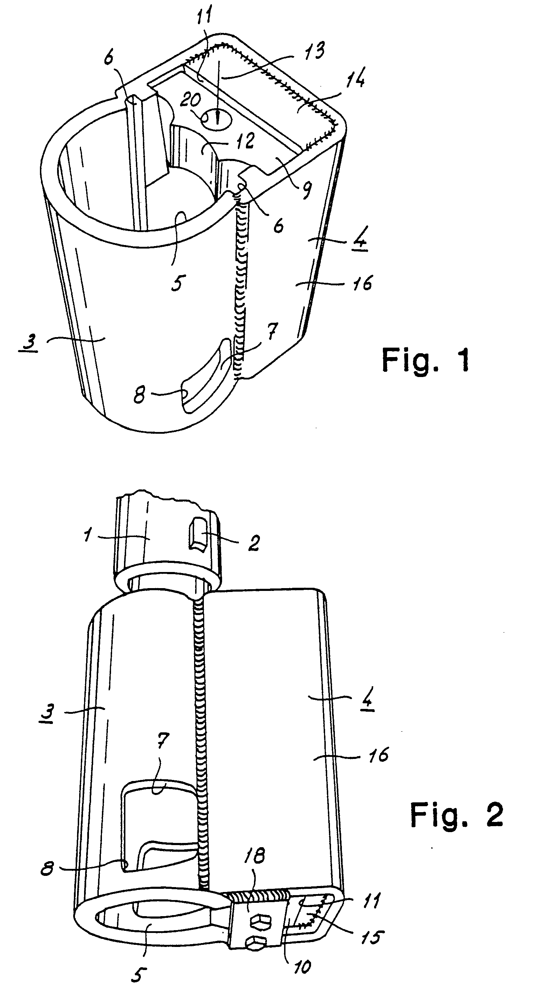

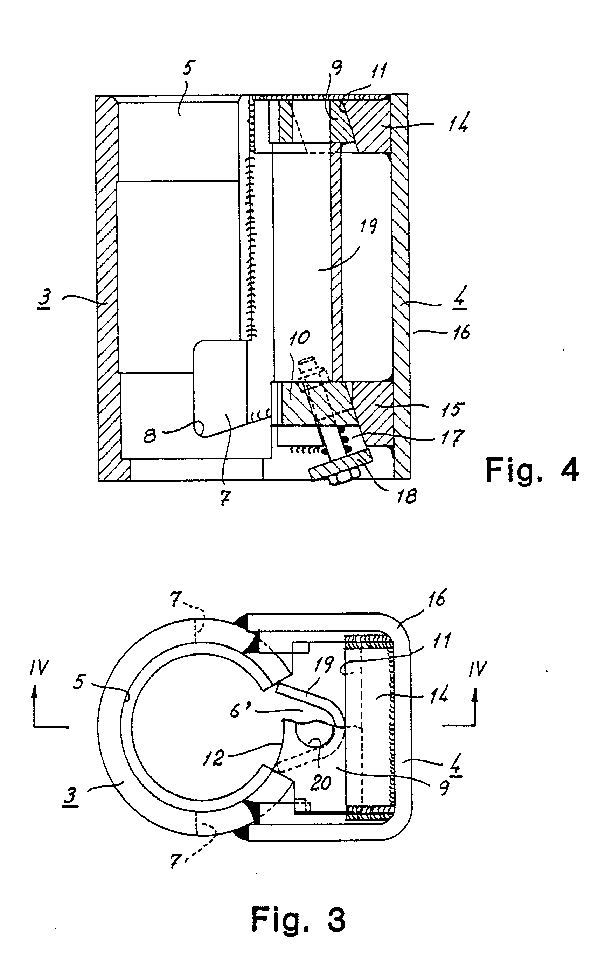

In the drawings figure 1 diagrammatically and in a perspective view shows a quick socket according to the invention seen from above, and figure 2 correspondingly shows the quick socket of figure 1 seen from underneath. Figure 3 is a view from above of a slightly modified embodiment of a quick socket, and figure 4 is a cross-section along line IV—IV of figure 3.

The quick socket illustrated in figures 1 and 2 is adapted to a circular cylindrical strut 1 which at or adjacent the lower end thereof has a projecting shoulder 2 for securing of the strut in a corresponding groove in the socket. The socket generally comprises a carrier portion 3 and a locking portion 4, in which the carrier portion 3 is in part circular cylindrical extending over an angle of at least 180° or preferably slightly more, and in which the carrier portion 3 is open to the locking portion 4. The carrier portion has a strut receiving space 5 which with some play allows a movement downwards of the strut into the carrier portion. For securing the strut against unintentional movement upwards after having been mounted the carrier portion is formed with a bayonet catch like groove comprising a vertical slot 6 on each side of the locking portion 4 and adjacent said portion and making it possible to move the strut down with the shoulder 2 in the groove 6. The vertical groove 6 is directly connected to a recess 7 a the lower part of the carrier portion, whereby the slot 6 together with the recess 7 in combination forms the bayonet catch like groove. The lower edge of the recess 7 is preferably slightly sloping downwards so that the strut 1 with the shoulder 2 resting on said lower edge of the recess 7 automatically slides down to the innermost and lowermost part of the recess and thereby prevents an unintentional removal of the strut from the carrier portion.

For providing a joint between the strut 1 and the carrier portion 3 which is free from play the locking portion 4 comprises two key means 9 and 10, a first means provided at the upper end of the socket and the other key means provided at the lower end of the socket. The key means 9 and 10 are mounted in obliquely extending slots 11 in the locking portion, and the key means are biassed in the direction upwards by springs or similar means, whereby the keys while sliding in the slots 11 move in a combined movement upwards and inwards to the carrier portion, so that the keys force the strut into a contact with the carrier portion which is free from play. Preferably the key means 9 and 10 are designed with a bow formed surface 12 corresponding to the peripheral surface of the strut so that the carrier means together with the bow formed surfaces of the keys nearly completely enclose the strut.

When mounting the strut in the quick socket the strut is moved into the socket from above with the shoulder 2 in any of the two vertical slots 6 whereupon the strut is let down or is pushed downwards, whereby the wedge means 9 and 10 are pressed downwards-outwards by the strut to allow a substantially free movement downwards of the strut in the socket. In the down position the strut is rotated so that the locking shoulder 2 is enclosed in the bottom recess 7 and is secured against unintentional movement upwards. The spring loaded wedge means 9 and 10 thereby force the strut to a play-free contact with the carrier portion 3, and the wedge means 9 and 10 in addition thereto contributes to prevent an unintentional movement upwards of the strut even if the strut for some reason may have rotated so that the locking shoulder 10 is positioned online with the vertical slots 6.

A releasing and removal of the strut is made in that the wedge means manually or by means of any simple tool is pressed down indicated with the arrow 13 in figure 1, whereby the strut is released and may easily be lifted out from the quick socket.

Figures 3 and 4 show an embodiment of the invention in which the carrier portion 3 is a part of a cylinder, and in which the locking portion 4 is a triangular box which is welded to the outer surface of the cylinder. The obliquely extending grooves 11 are formed in that blocks 14 and 15 having grooves are welded to the sides of a lock portion box 16 at the upper part and the lower part thereof respectively. The keys 9 and 10 are slidable in the grooves 11 of the blocks 14 and 15. The lower key means 10 is biassed in the direction upwards by a spring 17 acting between a fixed cross bar 18 in the box 16 and the bottom surface of the key 10. For actuating the upper key 9 and the lower key 10, concurrently a bow formed bar 19 is provided between the upper surface of the wedge 10 and the lower surface of the wedge 9, and preferably the bar 19 is welded to the upper wedge 9. The bow formed bar 19 also provides the vertical slot 6 through which the projecting shoulder 10 of the strut can be moved downwards, and in this case the strut may be rotated in either direction for engagement with the bayonet recess 7 on either side of the carrier portion. In figure 3 is shown like in figure 1 that the upper key means may have a vertical bore 20 in which a tool can engage for forcing the two keys downwards thereby releasing the strut from the socket.

It is to be understood that the above description and the embodiments of the invention illustrated in the drawings are only illustrated examples and that many different modifications may be presented within the scope of the appended claims.

### Claims

1. Quick socket and strut apparatus, especially for transport vehicles, and comprising a cylindrical strut (1, 2) and a socket fitting therewith and having a sleeve (3) adapted to be mounted at the wagon bridge or any other part of the vehicle and having a strut receiving space (5) which with some play fits the strut (1, 2), and further comprising one or more upwards and inwards to the centre of the quick socket biassed wedge means (9, 10) allowing a free introduction of the strut (1, 2) in the socket but restraining a movement of the strut (1, 2) out of the socket from its mounted position, characterized in that the strut has a circular cross-section and the socket is formed with a bayonet like locking groove (6, 7; 6', 7) comprising at least one longitudinal groove (6; 6') co-operating with a cross groove (7) at the lower end thereof, and which bayonet like locking groove cooperates with at least one radially outwards projecting shoulder (2) of the strut (1) thereby preventing unintentional movement of the strut (1) out of the quick socket, and in that the wedge means (9, 10) is formed as a concave circular segment which partly encloses and directly acts on the strut (1) while the strut can successively be introduced in the socket part (3) and by time be rotated until the locking shoulder (2) of the strut (1) is in a position locked by the bayonet cross groove (6, 7; 6', 7).

2. Apparatus according to claim 1, characterized in that the socket is formed with a carrier portion (3) adapted to enclose the largest portion of the strut (1) and a locking portion (4) including the wedge means (9, 10) and one or more springs (17) biassing the said wedge means (9, 10) upwards-inwards to the center of the socket thereby pressing the strut into a play-free contact with the carrier portion (3).

3. Apparatus according to claim 1 or 2, characterized in that it is formed with two separate but interconnected wedge means (9, 10), whereby one wedge means (9) is provided at the upper part of the socket and the second wedge means (10) is provided at the lower part of the socket.

4. Apparatus according to any of claims 1—3, characterized in that the locking portion (4) has a guide (14, 15) for the wedge means (9, 10) formed as an obliquely downwards-outwards extending groove (11) in which the wedge means (9, 10) is/are slidable.

5. Apparatus according to any of the preceding claims, characterized in that the cross groove is the form of a recess (7) at the bottom of the or each vertical groove or grooves (6) and having a downwards sloping bottom surface along which the radial shoulder or shoulders (2) of the strut (1) tend to slide upon rotation of the strut to a point (8), at which the strut (1) is positively locked by the bayonet groove (6, 7).

6. Apparatus according to any of the preceding claims, characterized in that the vertical groove part (6') of the bayonet like groove is formed as a vertically open part of the carrier portion (3), and in that the cross groove (7) of the bayonet like groove opens on each side of the vertical open groove (6').

**Revendications**

1. Dispositif à douille rapide et montant, en particulier pour véhicules de transport, comprenant un montant cylindrique (1, 2) et une douille qui s'y ajuste et possède un manchon (3) adapté pour être monté sur le plateau de wagon ou sur une autre partie quelconque du véhicule, et possédant un espace (5) de réception du montant qui s'ajuste au montant (1, 2) avec un certain jeu, ce dispositif comprenant en outre un ou plusieurs moyens à effet de coin (9, 10) sollicités vers le haut et vers l'intérieur, en direction centre de la douille rapide, qui permettent d'introduire librement le montant (1, 2) dans la douille mais s'opposent au mouvement d'extraction du montant (1, 2) par rapport à la douille en partant de sa position montée, caractérisé en ce que le montant possède une section circulaire et la douille est munie d'une gorge de verrouillage du type baïonnette (6, 7; 6', 7) qui comprend au moins une rainure longitudinale (6; 6') coopérant avec une rainure transversale (7) prévue à son extrémité inférieure, laquelle gorge de verrouillage du type baïonnette coopère avec au moins un épaulement (2) du montant (1), lequel épaulement fait saillie radialement vers l'extérieur en empêchant ainsi le montant (1) de sortir accidentellement de la douille rapide, et en ce que le moyen à effet de coin (9, 10) est constitué par un segment circulaire concave qui entoure partiellement le montant (1) et agit directement sur celui-ci pendant que le montant peut être successivement introduit dans la partie de douille (3) puis tourné jusqu'à ce que l'épaulement de verrouillage (2) de la douille (1) se trouve dans une position verrouillée par la rainure transversale de baïonnette (6, 7; 6', 7).

2. Dispositif selon la revendication 1, caractérisé en ce que la douille est munie d'une partie support (3) adaptée pour entrourer la plus grande partie du montant (1) et d'une partie de verrouillage (4) qui comprend le moyen à effet de coin (9, 10), et un ou plusieurs ressorts (17) qui sollicitent ledit moyen à effet de coin (9, 10) vers le haut et vers l'intérieur, vers le centre de la douille, en pressant de cette façon le montant pour établir un contact sans jeu avec la partie support (3).

3. Dispositif selon la revendication 1 ou 2, caractérisé en ce qu'il est muni de deux moyens à effet de coin (9, 10) séparés mais interconnectés, un moyen à effet de coin (9) étant prévu à la partie supérieure de la douille et le deuxième moyen à effet de coin (10) étant prévu à la partie inférieure de la douille.

4. Dispositif selon l'une quelconque des revendications 1 à 3, caractérisé en ce que la partie de verrouillage (4) possède un guide (14, 15) pour le(s) moyen(s) à effet de coin (9, 10), constitué par une rainure (11) s'étendant obliquement vers le bas et vers l'extérieur et dans laquelle le(s) moyen(s) à effet de coin (9, 10) peut (peuvent) coulisser.

5. Dispositif selon l'une quelconque des revendications précédentes, caractérisé en ce que la rainure transversale présente la forme d'un évidement (7) situé au bas de la rainure verticale ou de chaque rainure verticale (6) et qui présente une surface inférieure en pente descendante le long de laquelle l'épaulement radial ou les épaulements radiaux (2) du montant (1) tend ou tendant à glisser lorsque le montant tourne, jusqu'à un point (8) auquel le montant (1) est positivement verrouillé par la rainure de baïonnette (6, 7).

6. Dispositif selon l'une quelconque des revendications précédentes, caractérisé en ce que la partie rainure verticale (6') de la gorge du type baïonnette forme une partie ouverte verticalement de la partie support (3) et en ce que la rainure transversale (7) de la gorge du type baïonnette s'ouvre de chaque côté de la rainure verticale ouverte (6').

**Patentansprüche**

1. Schnellkupplungsaufnahme für Rungen insbesondere bei Transportfahrzeugen, mit einer zylindrischen Runge (1, 2) und einer zu dieser passenden Einsteckaufnahme, die eine zur Montage an einer Fahrzeugbrücke oder einem anderen Fahrzeugteil geeignete Muffe (3) und einen Rungen-Aufnahmeraum (5) aufweist, in den die Runge (1, 2) mit leichtem Spiel einsteckbar ist, und mit einem oder mehreren in Aufwärtsrichtung und einwärts zum Zentrum der Schnellkupplungsaufnahme vorgespannten Keilmitteln (9, 11), welche eine freie Einführung der Runge (1, 2) in die Einsteckaufnahme zuläßt, eine Bewegung der Runge (1, 2) aus deren Montageposition heraus aus der Einsteckaufnahme jedoch beschränkt, dadurch gekennzeichnet, daß die Runge einen kreisförmigen Querschnitt hat und die Einsteckaufnahme eine bajonettartige Verriegelungsnut (6, 7; 6', 7) aus wenigstens einer Längsnut (6; 6') und einer mit dieser zusammenwirkenden Quernut (7) an deren unteren Ende aufweist, daß die bajonettartige Verriegelungsnut mit wenigstens einer radial auswärts vorspringenden Schulter (2) der Runge (1) zusammenwirkt, wodurch eine unbeabsichtigte Bewegung der Runge (1) aus der Schnellkupplungsaufnahme verhindert wird, und daß das Keilmittel (9, 10) als konkaves kreisförmiges Segment ausgebildet ist, welches die Runge (1) teilweise umschließt und direkt auf die Runge wirkt, während die Runge zunächst in die Muffe (3) eingeführt und danach zu gegebener Zeit gedreht werden kann, bis die Verriegelungsschulter (2) der Runge (1) in einer durch die Bajonett-Quernut (6, 7; 6', 7) verriegelten Position ist.

2. Schnellkupplungsaufnahme nach Anspruch 1, dadurch gekennzeichnet, daß die Einsteckaufnahme mit einem zum Einschluß des größten Teils der Runge (1) geeigneten Trägerabschnitt (3) und einem Verriegelungsabschnitt (4) versehen ist, wobei letzterer die Keilmittel (9, 10) und eine oder mehrere Federn (17) aufweist, die die Keilmittel (9, 10) aufwärts und einwärts in Richtung des Zentrums der Einsteckaufnahme vorspannen, wodurch die Runge in einen spielfreien Kontakt mit dem Trägerabschnitt (3) gedrängt wird.

3. Schnellkupplungsaufnahme nach Anspruch 1 oder 2, dadurch gekennzeichnet, daß sie mit zwei getrennten, jedoch miteinander verbundenen Keilmitteln (9, 10) versehen ist, wobei ein Keilmittel (9) im oberen Teil der Einsteckaufnahme und das zweite Keilmittel (10) im unteren Teil der Einsteckaufnahme angeordnet sind.

4. Schnellkupplungsaufnahme nach einem der Ansprüche 1 bis 3, dadurch gekennzeichnet, daß der Verriegelungsabschnitt (4) eine Führung (14, 15) für die Keilmittel (9, 10) hat, die als schräg nach unten und außen verlaufende Nut (11) ausgebildet ist, in der die Keilmittel (9, 10) verschiebbar sind.

5. Schnellkupplungsaufnahme nach einem der vorhergehenden Ansprüche, dadurch gekennzeichnet, daß die Quernut als am Boden der oder jeder vertikalen Nut (6) angeordnete Ausnehmung (7) ausgebildet ist und eine nach unten geneigte Bodenfläche aufweist, entlang der die wenigstens eine radiale Schulter (2) der Runge (1) bei deren Drehung zu einem Punkt (8) zu gleiten sucht, an welchem die Runge (1) durch die Bajonettnut (6, 7) positiv verriegelt ist.

6. Schnellkupplungsaufnahme nach einem der vorhergehenden Ansprüche, dadurch gekennzeichnet, daß der vertikale Nutteil (6') der bajonettartigen Nut als vertikal offener Teil des Trägerabschnitts (3) ausgebildet ist und daß die Quernut (7) der bajonettartigen Nut auf jeder Seite der vertikal offenen Nut (6') offen ist.

# 0 098 250

Fig. 1

Fig. 2

Fig. 4

Fig. 3